(19) Europäisches Patentamt
European Patent Office
Office européen des brevets

(11) Veröffentlichungsnummer : **0 204 245**
**B1**

(12) # EUROPÄISCHE PATENTSCHRIFT

(45) Veröffentlichungstag der Patentschrift : **21.12.88**

(51) Int. Cl.$^4$ : **C 09 B 62/002**, D 06 P 1/38

(21) Anmeldenummer : **86107146.2**

(22) Anmeldetag : **27.05.86**

(54) **Reaktivfarbstoffe.**

(30) Priorität : **07.06.85 DE 3520391**

(43) Veröffentlichungstag der Anmeldung : **10.12.86 Patentblatt 86/50**

(45) Bekanntmachung des Hinweises auf die Patenterteilung : **21.12.88 Patentblatt 88/51**

(84) Benannte Vertragsstaaten : **CH DE FR GB LI**

(56) Entgegenhaltungen :
**EP-A- 0 053 743**
**BE-A- 572 015**
**US-A- 2 355 497**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Harms, Wolfgang, Dr.**
**Walter-Flex-Strasse 21**
**D-5090 Leverkusen (DE)**
Erfinder : **Wunderlich, Klaus, Dr.**
**Carl-Rumpff-Strasse 21**
**D-5090 Leverkusen (DE)**

**EP 0 204 245 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind Farbstoffe der Formel

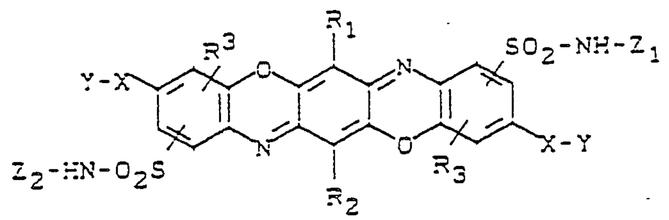

(I)

worin

$R_1$, $R_2$ = Wasserstoff, Cl, Br, gegebenenfalls substituiertes $C_1$-$C_4$-Alkyl, $C_1$-$C_4$-Alkoxy, Phenoxy, Carbonamid, Acylamino oder Carboxy,

$R_3$ = H, Cl, Br, gegebenenfalls substituiertes $C_1$-$C_4$-Alkyl oder $C_1$-$C_4$-Alkoxy,

X = $\overset{R_4}{\overset{|}{N}}$, O

$R_4$ = H oder gegebenenfalls substituiertes $C_1$-$C_4$-Alkyl,

Y = gegebenenfalls durch Sulfo, Sulfato-, Phosphato-, Carboxy-, Thiosulfato-, Hydroxy-, Alkoxy substituierte oder NH, O oder $SO_2$ unterbrochene $C_1$-$C_6$-Alkylreste, Cycloalkylreste, Aralkylreste und Arylreste,

$Z_1$, $Z_2$ = heterocyclischer faserreaktiver Rest.

Die neuen Farbstoffe unterscheiden sich von den nächstvergleichbaren bekannten Farbstoffen gemäß EP-A-0 053 743 durch das Fehlen eines Brückengliedes zwischen dem Reaktivrest und den Sulfonamidgruppen des Chromophors.

Geeignetes Acylamino ist insbesondere gegebenenfalls substituiertes $C_1$-$C_4$-Alkylcarbonylamino oder Phenylcarbonylamino.

Als gegebenenfalls substituiertes Carbonamid kommt vor allem $CONH_2$ oder mono- oder di- $C_1$-$C_4$-Alkylcarbonamid in Frage.

Geeignete Reste $R_3$ sind außer Wasserstoff beispielsweise gegebenenfalls substituiertes $C_1$-$C_4$-Alkyl oder $C_1$-$C_4$-Alkoxy sowie Cl und Br.

Geeignete Reste $R_4$ sind außer Wasserstoff beispielsweise gegebenenfalls durch OH, $SO_3H$, $OSO_3H$, $OPO_3H_2$, COOH oder Halogen, substituiertes $C_1$-$C_4$-Alkyl wie Methyl, Ethyl, Propyl, Butyl, Hydroxyethyl, Sulfatoethyl, Sulfoethyl, Phosphatoethyl, Carboxyethyl, Carboxypropyl, Carboxybutyl, Halogenalkyl wie Chlorethyl, Chlorpropyl, Pentyl, Hexyl.

Vorzugsweise stehen $R_1$, $R_2$ für Cl, $R_3$ und $R_4$ für Wasserstoff.

Geeignete Reste Y sind 2-Sulfoethyl, 2-Sulfatoethyl, 2-Phosphatoethyl, 2-Thiosulfatoethyl, 2-Hydroxyethyl, 2-Carboxyethyl, Carboxymethyl, 3-Sulfo-1-propyl, 3-Sulfato-1-propyl, 3-Phosphato-1-propyl, 2-Sulfo-1-propyl, 2-Sulfato-1-propyl, 3-Hydroxy-1-propyl, 2-Hydroxy-1-propyl, 2,3-Dihydroxy-1-propyl, 2,3-Disulfato-1-propyl, 3-Sulfo-2-sulfato-1-propyl, 3-Sulfato-1-sulfo-2-propyl, 3-Chlor-2-hydroxy-1-propyl, 3-Methoxy-1-propyl, 3-Ethoxy-1-propyl, 3-Carboxy-1-propyl, 1-Carboxy-2-propyl, 4-Sulfo-1-butyl, 4-Sulfato-1-butyl, 4-Hydroxy-1-butyl, 4-Carboxy-1-butyl, 3-Sulfato-1-butyl, 3-Hydroxy-1-butyl, 3-Sulfato-2-butyl, 3-Hydroxy-2-butyl, 1-Sulfato-2-butyl, 1-Hydroxy-2-butyl, 1-Hydroxy-2-methyl-2-propyl, 2-Hydroxy-2-methyl-1-propyl, 2-Sulfato-2-methyl-1-propyl, 5-Carboxy-1-pentyl, $-CH_2-CH_2-O-CH_2-OH$, $-CH_2-CH_2-O-CH_2-CH_2-OSO_3H$, $-CH_2-CH_2-NH-CH_2-CH_2-OH$, $-CH_2-CH_2-NH-CH_2-CH_2-OSO_3H$, $-CH_2-CH_2-\underset{CH_3}{\underset{|}{N}}-CH_2-CH_2-OH$,

$-CH_2-CH_2-\underset{CH_3}{\underset{|}{N}}-CH_2-CH_2-OSO_3H$, $-CH_2-CH_2-S-CH_2-CH_2-OH$,

$-CH_2-CH_2-SO_2-CH_2-CH_2OH$,
$-CH_2-CH_2-O-CH_2-CH_2-Cl$,
$-CH_2-CH_2-SO_2-CH_2-CH_2-OPO_3H_2$,
$-CH_2-CH_2-(O-CH_2-CH_2)_{2\text{-}3}-OH$,
$-CH_2-CH_2-SO_2-CH_2-CH_2-OSO_3H$,
$-CH_2-CH_2-O-CH_2-CH_2-OPO_3H_2$,
$-CH_2-CH_2-SO_2-CH_2-CH_2-S_2O_3H$,
$-CH_2-CH_2-(O-CH_2-CH_2)_{2\text{-}3}OCH_3$.

Geeignete Cycloalkylreste sind Cyclohexyl, 2-, 3-, 4-Methylcyclohexyl, Cyclopentyl, Cyclohexylmethyl.

Geeignete Aralkylreste sind Benzyl, 2-, 3-, 4-Sulfobenzyl, 2-Phenyl-ethyl, 2-(2'-, 3'-, 4'-Sulfophenyl)-ethyl, 1-Phenyl-2-propyl, 1-(2'-, 3'-, 4'-Sulfophenyl)-2-propyl, 2-Phenyl-1-propyl, 2-(2'-, 3'-, 4'-Sulfophenyl)-1-propyl, 3-Phenyl-1-propyl, 3-(2'-, 3'-, 4'-Sulfophenyl)-1-propyl, 1-Phenyl-3-butyl, 1-(2'-, 3'-, 4'-Sulfophenyl)-3-butyl, 2-Benzyl-cyclohexyl, 2-(2'-, 3'-, 4'-Sulfobenzyl)-cyclohexyl, 5-Methyl-1-phenyl-3-hexyl, 5-Methyl-1-(2'-, 3'-, 4'-Sulfophenyl)-3-hexyl.

Geeignete Arylreste sind Phenyl,

2-, 3-, 4-Sulfophenyl, 2,4-Disulfophenyl, 2,5-Disulfophenyl, 4-Methyl-2-sulfophenyl, 3-Methyl-4-sulfophenyl, 3-Methyl-4,6-disulfophenyl, 2-Methyl-4-sulfophenyl, 4-Methoxy-2-sulfophenyl, 2-Methoxy-4-sulfophenyl, 3-Methoxy-4-sulfophenyl, 3-Methoxy-4,6-disulfophenyl, 2-, 3-, 4-Methylphenyl, 2-, 3-, 4-Methoxyphenyl, 2,4-Dimethylphenyl, 3,4-Dimethylphenyl, 3,4-Dimethyl-5-sulfophenyl, 2-, 3-, 4-Chlorphenyl, 2,4-Dimethoxyphenyl, 2,5-Dimethoxyphenyl, 2,4-Dimethoxy-5-sulfophenyl, 2,4-Dimethoxy-3-sulfophenyl, 2,5-Dimethoxy-4- und -5-sulfophenyl, 2-, 3-, 4-Carboxyphenyl, 4-Chlor-2-sulfophenyl, 4-Acetylamino-2-sulfophenyl, 3-Acetylamino-4,6-disulfophenyl.

Geeignete faserreaktive Reste, also solche Reaktivgruppen, d. h. Gruppen, die mit den OH- oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bzw. an einen Monozin-, Diazin-, Triazin-, z. B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatischcarbocyclische Ringe aufweist, wie ein Chinolin-, Phthalazin-, Cinnolin-, Chinazolin-, Chinoxalin-, Acridin-, Phenazin- und Phenanthridin-Ring-System.

Unter den reaktiven Substituenten am Heterocyclus sind beispielsweise zu erwähnen Halogen (Cl, Br oder F), Ammonium einschließlich Hydrazinium, Sulfonium, Sulfonyl, Azido($-N_3$), Rhodanido, Thio, Thiolether, Oxiether, Sulfinsäure und Sulfonsäure.

Im einzelnen sind beispielsweise zu nennen :

2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl, Hydroxy, Cyan, $C_1$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen oder Acylamino.

Im einzelnen seien folgende Reste genannt :

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluortriazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-β-Cyanethylamino-4-fluor-triazinyl-6, 2-Benzoylamino-4-fluor-triazinyl-6, 2-β-Phenylethylamino-4-fluor-triazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2', 5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2', 4'-Disulfophenyl)-amino-4-fluor-triazinyl-6, 2-(3', 5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4', 8'-Disulfonaphthyl-(2'))-amino-4-fluor-triazinyl-6, 2-(6', 8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4', 6', 8'-Trisulfonaphthyl-(2'))-amino-4-fluor-triazinyl-6, 2-(3', 6', 8'-Trisulfonaphthyl-(2'))-amino-4-fluor-triazinyl-6, 2-(3', 6'-Disulfonaphthyl-(1'))-amino-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m- oder p-Sulfophenoxy)-4-fluor-triazinyl-6, 2-(o-, m- oder p-Methyl- oder -Methoxy-phenoxy)-4-fluortriazinyl-6, 2-β-Hydroxy-ethylmercapto-4-fluor-triazinyl-6, 2-Phenylmercapto-4-fluor-triazinyl-6, 2-(4'-Methylphenyl)-mercapto-4-fluortriazinyl, 2-(2', 4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Reste und die entsprechenden durch Umsetzung der Halogenatome mit tertiären Basen wie Trimethylamin, Triethylamin, Dimethyl-β-hydroxyethylamin, Triethanolamin, N,N-Dimethylhydrazin, Pyridin, α- oder β-Picolin, Nicotinsäure oder Isonicotinsäure oder Sulfinaten insbesondere Benzolsulfinsäure erhältlichen Reste.

(Siehe Schema Seite 4 ff.)

Die Halogentriazinylreste können auch mit einem zweiten Halogentriazinylrest oder Halogendiazinylrest verknüpft sein. Beispiele für derartige Reste sind die folgenden :

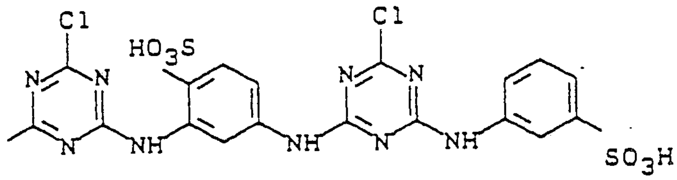

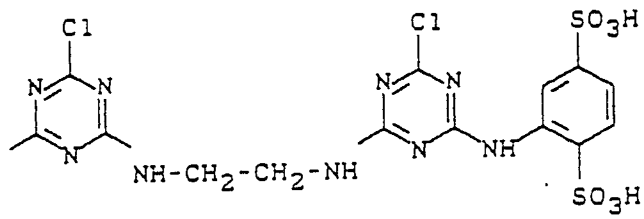

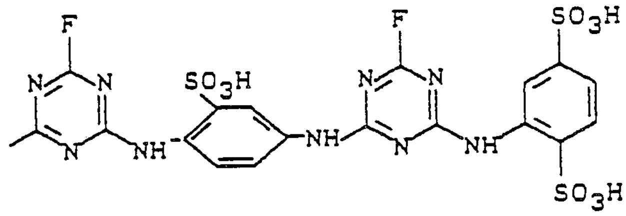

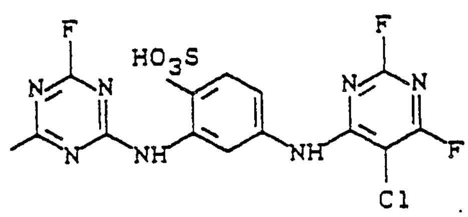

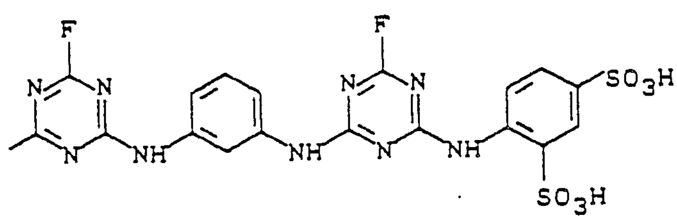

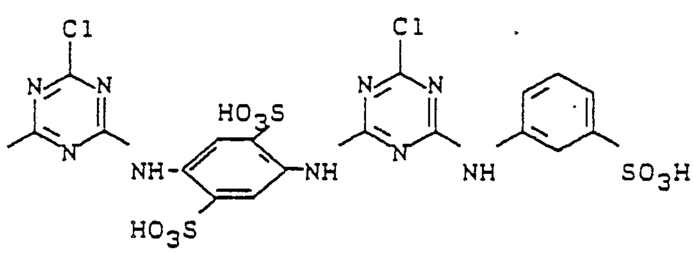

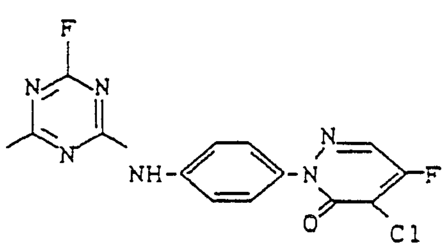

(Fortsetzung)

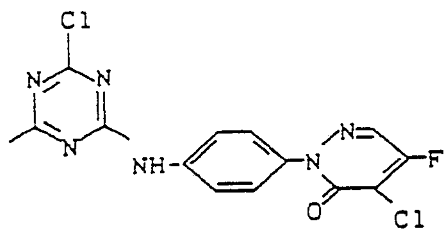

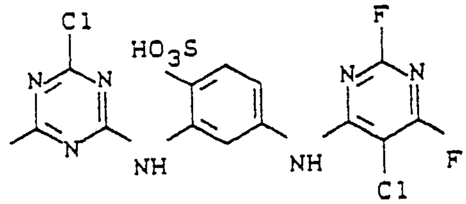

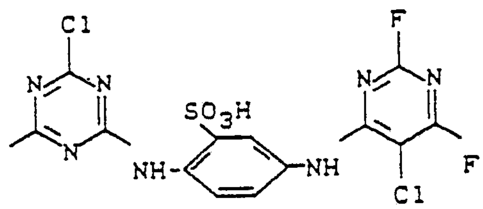

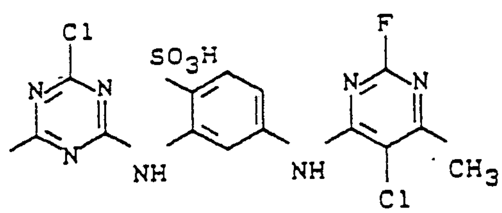

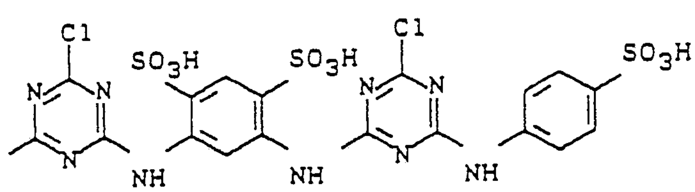

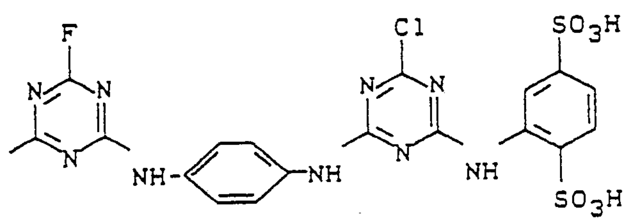

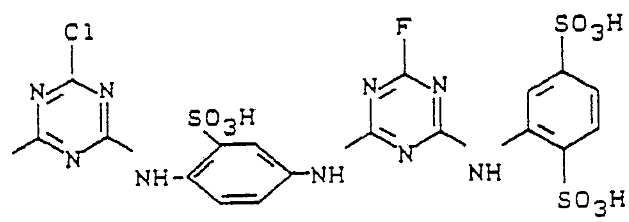

Weiter können die Halogentriazinylreste auch mit einem zur Bildung eines Vinylsulfonrestes befähigten Aminrest verknüpft sein, wie zum Beispiel 2-(2'-, 3'- oder 4'-(β-sulfatoethylsulfonyl-phenylamino-4-fluor-triazinyl-6, 2-(2'-, 3'-, 4'-(β-Thiosulfatoethyl-sulfonyl)-phenylamino)-4-fluor-triazinyl-6, 2-(2'-, 3'-,

4'-(β-Phosphatoethyl-sulfonyl)-phenylamino)-4-fluor-triazinyl-6, 2-(2'-, 3'-, 4'-β-acetoxy-ethylsulfonyl)-phenylamino)-4-fluor-triazinyl-6, 2-(2'-, 3'-, 4'-(β-Chlorethyl-sulfonyl)-phenylamino)-4-fluor-triazinyl-6, 2-(2'-, 3'-, 4'-Vinylsulfonyl-phenylamino)-4-fluor-triazinyl-6, 2-(2-(β-Sulfatoethylsulfonyl)-ethylamino)-4-fluor-triazinyl-6 sowie die entsprechenden 2-Substituierten-4-chlor-triazinyl-6-reste.

Weiterhin können die reaktiven Halogenatome in den oben genannten 2-Halogen-4-substituierten-triazinyl-Resten unter Bildung quartärer Salze mit tertiären Basen wie Trimethylamin, Triethylamin, Dimethyl-β-hydroxyethylamin, Triethylamin, N,N-Dimethylhydrazin, Pyridin, α-, β-Picolin, Nicotinsäure oder Isonicotinsäure zur Reaktion gebracht werden.

Mono-, Di- oder Trihalogenpyrimidinylreste, wie 2,4-Dichlorpyrimidinyl-6-, 2,3,5-Trichlorpyrimidinyl-6-, 2,4,-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4', 5'-Dichlorpyridazon-6'-yl-1')-phenylsulfonyl- oder -carbonyl-, β-(4', 5'-Dichlorpyridazon-6'-yl-1')-ethylcarbonyl- sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlorpyrimidin-4-yl ; 2-Methyl-4-fluor-5-methylsulfonylpyrimidinyl-6 ; 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl ; β-(4'-Fluor-5'-chlor-pyridazon-6'-yl-1')-ethylcarbonyl-, sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6 ; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylypyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl- ; 2-Chlorbenzthiazol-5- oder -6-carbonyl- oder -5- oder -6-sulfonyl-, 2-Arylsulfonyl- oder Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6-sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl.

Bevorzugte faserreaktive Reste $Z_1$, $Z_2$, die mindestens einen reaktiven Substituenten an einem heterocyclischen Ring gebunden enthalten, sind fluor- bzw. fluor-chlorhaltige Pyrimidine, Fluor- oder chlorhaltige Triazine und Dichlorchinoxaline.

Bevorzugt unter den Farbstoffen der Formel (I) sind solche der Formel

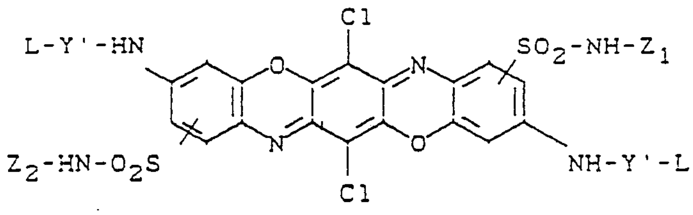

(II)

worin
$Z_1$, $Z_2$ die oben angegebene Bedeutung haben,
$Y' = C_1$-$C_6$-Alkylen, Ar-($C_1$-$C_4$)-alkylen,
$L = SO_3H$, $OSO_3H$, $OPO_3H_2$, COOH
weiterhin bevorzugte Farbstoffe sind solche der Formel

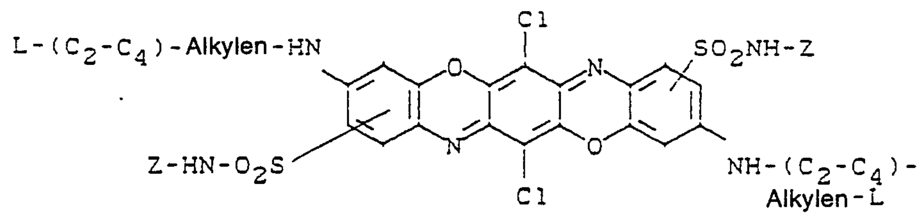

(III)

worin
L die oben angegebene Bedeutung hat und
Z für den Rest eines Halogenpyrimidins, Halogentriazins, insbesondere für Fluorpyrimidinyl-, Monochlor- oder Monofluor-s-triazinyl- oder für 2,3-Dichlorchinoxalin-6-carbonyl- oder -6-sulfonyl steht.

Farbstoffe der Formel (I) mit $Z_1$, $Z_2$ = faserreaktiver Rest werden erhalten durch Kondensation von Verbindungen der Formel

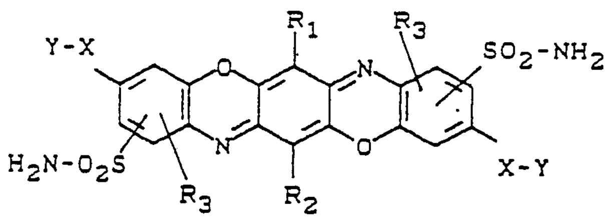

(IV)

worin $R_1$-$R_3$, X und Y die oben angegebene Bedeutung haben, mit 2 Mol einer Reaktivkomponente

Z'-Halogen (V)

worin
Z' = faserreaktiver Rest
Halogen = F, Cl, Br.

Die Kondensation der Dioxazin-Verbindungen der Formeln (IV) und der Reaktivkomponenten (V) wird entweder in wäßrigem oder wäßrig organischem Medium in Abhängigkeit von der eingesetzten Reaktivkomponente bei Temperaturen von 0-80 °C und pH-Werten von 7-11 in Gegenwart alkalischer Kondensationsmittel wie wäßriger Alkalihyrogencarbonat-, Alkalicarbonat-, Alkalihydroxid-, Dialkalihydrogen-phosphat- oder Trialkaliphosphat-Lösung durchgeführt, oder aber die Kondensation wird in aprotischen organischen Lösungsmitteln wie Toluol, Halogenbenzolen, Nitrobenzol, Dimethylformamid, N-Methylpyrrolidon, Tetramethylensulfon, Dimethylsulfoxid, Aceton, Methylethylketon gegebenenfalls in Gegenwart aprotischer organischer Basen wie Trialkylamin, N,N-Dialkylanilin, Pyridin oder Alkylpyridinen bei Temperaturen von 0-80 °C vollzogen.

Bei Kondensation mit weniger als 2 Mol (V) entstehen Gemische aus Mono- und Bis-kondensationsprodukt.

Die Herstellung von Verbindungen der Formel (IV) kann erfolgen nach an sich bekannten Methoden durch Kondensation von 1,4-Benzochinonen der Formel

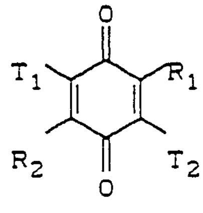

(VI)

worin

$R_1$, $R_2$ die oben angegebene Bedeutung haben und

$T_1$, $T_2$ Wasserstoff, Cl, Br, OAlkyl oder OAryl bedeuten, mit 5-Amino-2-(x-y-substituierten)-benzolsulfonamiden der Formel

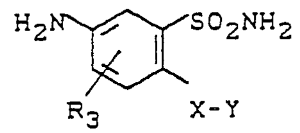

(VII)

worin $R_3$, X und Y die oben angegebene Bedeutung haben, zu Verbindungen der Formel

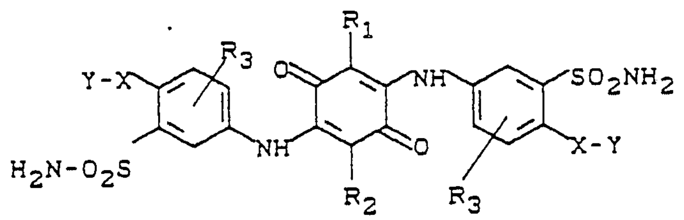

(VIII)

worin $R_1$-$R_3$, X und Y die oben angegebene Bedeutung haben, und nachfolgenden Ringschluß der Dianilide (VIII) zu den Triphendioxazin-Verbindungen der Formel (IV).

Je nach den beim Ringschluß angewandten Reaktionsbedingungen können die Sulfonamidgruppen in den Benzringen der Dioxazine (IV) entweder in den o- oder in den p-Stellungen zu den Ringsauerstoffatomen des Dioxazin-Systems auftreten.

Die Kondensation der Benzochinone der Formel (VI) mit den Aminobenzolsulfonamiden (VII) erfolgt am besten in wäßrigem oder wäßrig-organischem Medium unter Zugabe alkalischer Kondensationsmittel bei pH-Werten von 3-11, vorzugsweise 4-8, und Temperaturen von 20-90 °C, vorzugsweise 40-70 °C oder in gepufferten Lösungen, die obige alkalische Kondensationsmittel enthalten. Man kann auch in rein organischem Milieu unter Zusatz säurebindender Mittel arbeiten.

Alkalische Kondensationsmittel sind beispielsweise Natriumhydrogencarbonat, Natriumcarbonat, Natrium- oder Kaliumacetat, Natronlauge, Kalilauge, Natriumphosphate, Natriumborat.

Im allgemeinen fallen die Kondensationsprodukte der Formel (VIII) als schwerlösliche, braune Produkte aus.

Eine Variante zur Herstellung von Verbindungen der Formel (VIII) besteht in der Addition von Aminobenzolsulfonamiden der Formel (VII) an 1,4-Benzochinone der Formel

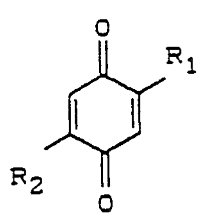

(IX)

worin $R_1$ und $R_2$ die oben angegebene Bedeutung haben, und Oxydation der primär entstehenden Addukte.

Der Ringschluß der Chinonkondensationsprodukte (VIII) zu den Dioxazinen (IV) kann nach an sich bekannten Methoden, wie sie in den Deutschen Offenlegungsschriften 2 122 262, 2 124 080, 2 302 383, 2 344 781, 2 503 611, 2 823 828 und in der Britischen Patentschrift 2 019 872 erwähnt sind, insbesondere in konzentrierter Schwefelsäure und vor allem in Oleum mit $SO_3$-Gehalten von 1-50 % bei Temperaturen von 10-80 °C gegebenenfalls mit Zusatz von Oxidationsmitteln wie Kalium- oder Ammoniumperoxidisulfat, Braunstein oder organischen Peroxiden vorgenommen werden.

Eine Variante zur Herstellung von Triphendioxazinsulfonamidverbindungen der Formel (IV) besteht in der Kondensation von entsprechend substituierten Triphendioxazinsulfonsäurechloriden, die aus den Triphendioxazinen durch Sulfochlorierung oder aus entsprechenden Triphendioxazinsulfonsäuren nach bekannten Methoden zugänglich sind, mit Ammoniak.

Die neuen Farbstoffe sind wertvolle Produkte, die sich durch hohe Farbstärken auszeichnen. Sie eignen sich in dispergierter oder gelöster Form für die verschiedensten Anwendungszwecke.

In Form wasserlöslicher Verbindungen finden sie bevorzugtes Interesse für das Färben hydroxyl- und amidgruppenhaltiger Textilmaterialien, insbesondere von Materialien aus nativer und regenerierter Cellulose sowie synthetischen Polyamid- und Polyurethanfasern, Wolle und Seide.

Handelt es sich um wasserlösliche Reaktivfarbstoffe, so werden die genannten Materialien nach den

für Reaktivfarbstoffe allgemein üblichen Verfahren gefärbt oder bedruckt. Man erhält dann licht- und naßechte Färbungen und Drucke.

Bei Temperaturangaben in den Beispielen handelt es sich um °C. Die Formeln der wasserlöslichen Farbstoffe in der Beschreibung und in den Beispielen sind die freien Säuren. Handelt es sich um Reaktivfarbstoffe, dann werden diese in der Regel in Form ihrer Alkalisalze, insbesondere der Lithium-, Natrium- oder Kaliumsalze, isoliert und angewandt.

Die in den Beispielen angegebenen Farbkennzahlen beziehen sich auf Colour Index Hue Indication Chart (Indicator Numbers).

Beispiel 1

24,0 g Triphendioxazinverbindung der Formel

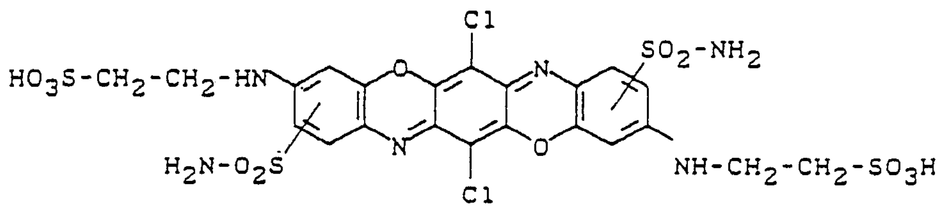

werden in 720 ml Wasser gelöst. Nach Abkühlung auf 0-5° stellt man mit 2n Natronlauge den pH-Wert auf 10,0 und läßt im Laufe von 5 Stunden 7,8 ml 2,4,6-Trifluor-5-chlorpyrimidin zutropfen. Man hält den pH-Wert weiter mehrere Stunden auf 9,5-10,0, setzt gegebenenfalls nach Abklingen der Natronlaugeaufnahme nochmals 2,0 ml Trifluorchlorpyrimidin innerhalb von 2 Stunden nach und führt die Kondensation unter obigen Bedingungen zu Ende. Man salzt dann aus der Lösung den Farbstoff durch langsamen Zusatz von 150 g Kaliumchlorid bei 20 °C aus, saugt die Fällung ab, wäscht den Filterkuchen mit 20 %iger Kaliumchloridlösung und trocknet das Produkt bei 50 °C im Umluftschrank. Man erhält einen Farbstoff der Formel

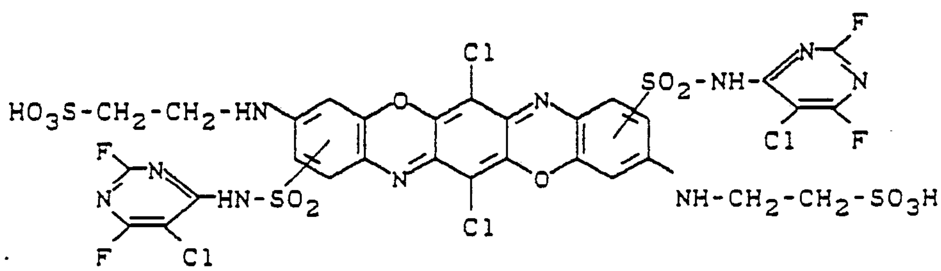

der Baumwolle aus langer Flotte in kräftigen, klaren Blautönen mit guten Echtheitseigenschaften färbt. C.I. Indicator Number 14, $\lambda_{max}$ = 619 nm in Wasser.

Die am Beginn des Beispiels 1 eingesetzte Triphendioxazinsulfonamid-Verbindung läßt sich wie folgt herstellen :

66,7 g 5-Nitro-2-(β-sulfoethylamino)-benzolsulfonamid, hergestellt aus 2-Chlor-5-nitrobenzolsulfonamid und Taurin, werden in 450 ml Wasser in einem Autoklaven unter Zusatz von 2 g Raney-Nickel und unter einem Wasserstoffdruck von 60 bar bei 20-60 °C reduziert. Nach Abfiltration des Nickels wird die Lösung des entstandenen 5-Amino-2-(β-sulfoethylamino)-benzolsulfonamids mit 22,4 g 2,3,5,6-Tetrachlorbenzochinon und 50 ml Isopropanol versetzt und auf 40 °C erwärmt. Durch Zutropfen von 2n Sodalösung wird der pH-Wert dabei ständig auf 5,5-6,0 gehalten. Nach Reaktionsende saugt man das ausgefallene braune Dianilid ab, wäscht es mit Methanol oder Aceton und trocknet es im Umluftschrank bei 50 °C.

29,1 g des erhaltenen Dianilids werden in 84 ml 10 %iges Oleum bei —5 bis —10 °C in einer Stunde eingetragen. Man steigert danach die Temperatur auf 15 °C und trägt unter Kühlung bei 10-20 °C innerhalb von 45 Minuten 20,6 g Kaliumperoxodisulfat ein. Nach beendeter Umsetzung rührt man das Reaktionsgemisch in 600 g Eis ein, saugt die Fällung ab und wäscht den Filterkuchen mit verdünnter Natriumchloridlösung und trocknet ihn gegebenenfalls bei 60 °C im Umluftschrank.

Beispiel 2

25,0 g Triphendioxazinverbindung der Formel

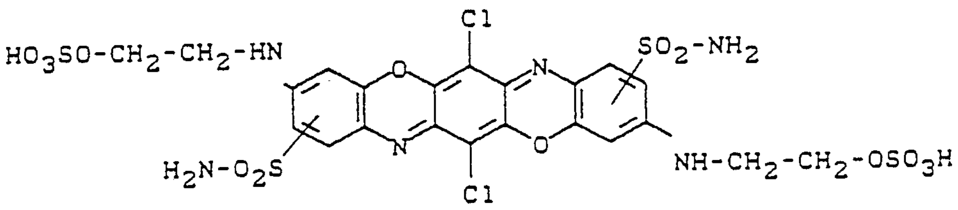

werden bei pH 10,5 in 750 ml Wasser gelöst. Man kühlt auf 0-5 °C ab und läßt im Laufe von 7 Stunden 10,0 ml 2,4,6-Trifluor-5-chlorpyrimidin zutropfen. Dabei hält man mittels 2n Natronlauge den pH-Wert im Reaktionsgemisch auf 9,5-10,0. Nach beendeter Kondensation salzt man den Farbstoff mit Natriumchlorid in feinen Nadeln aus, saugt ihn ab und wäscht ihn mit 10 %iger Natriumchloridlösung.

Er entspricht im wesentlichen neben geringen Mengen halbseitigem Kondensationsprodukt der Formel

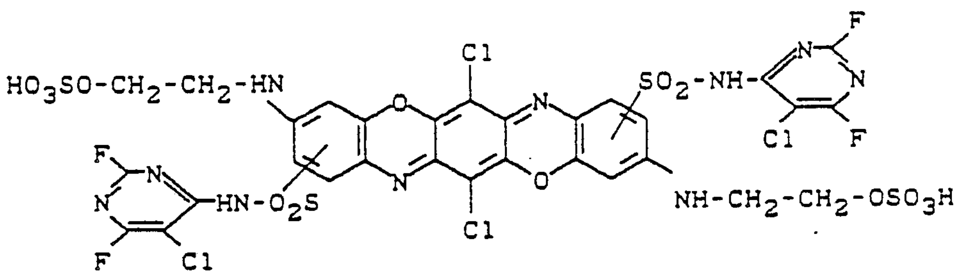

und färbt Baumwolle aus langer Flotte in kräftigen, klaren Blautönen mit sehr guten Echtheiten. C.I. Indicator Number 14, $\lambda_{max}$ = 619 nm in Wasser.

Das oben eingesetzte Triphendioxazin-sulfonamid gewinnt man analog zu Beispiel 1 wie folgt.

89,7 g 2-(β-Hydroxyethylamino)-5-nitrobenzolsulfonamid werden in 225 ml Wasser und 225 ml Isopropanol nach Zusatz von Raney-Nickel im Autoklaven unter 60 bar Wasserstoffdruck bei 20-50 °C reduziert. Nach Zusatz von weiteren 250 ml Wasser und Erhitzen auf 80 °C wird das Nickel durch Klärung entfernt und das Filtrat auf 0 °C abgekühlt. Das ausgefallene 5-Amino-2-(β-hydroxyethylamino)-benzolsulfonamid wird abgesaugt und getrocknet.

30,4 g des erhaltenen Aminobenzolsulfonamids werden in 300 ml Wasser und 60 ml Isopropanol bei 40 °C mit 16,0 g 2,3,5,6-Tetrachlorbenzochinon unter Zugabe von 2n Sodalösung zwecks laufender Regulierung des pH-Wertes auf 5,5-6,0 kondensiert.

Die braune Fällung wird bei 20 °C abgesaugt, mit Wasser und Isopropanol gewaschen und getrocknet. 38,0 g des Dianilids werden in 105 ml 20 %iges Oleum im Laufe von 2 Stunden bei —5 °C eingetragen. Man erwärmt anschließend auf + 15 °C und trägt bei 15-20 °C 32,3 g Kaliumperoxodisulfat in 45 Minuten ein. Nach beendeter Oxydation rührt man das Reaktionsgemisch in 600 g Eis ein, setzt 60 g Natriumchlorid zu, saugt den Niederschlag bei 20 °C ab und wäscht ihn mit 5 %iger Natriumchloridlösung. Er kann im Vakuum bei 50 °C getrocknet oder in feuchtem Zustand nach Ermittlung des Gehaltes eingesetzt werden.

## Beispiel 3

9,2 g Triphendioxazin-sulfonamid aus Beispiel 1

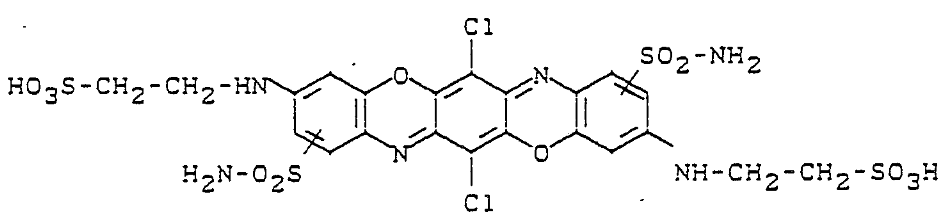

werden in 300 ml Wasser durch Zugabe von verdünnter Natronlauge bei pH 9,5 gelöst.

Man kondensiert eine Lösung von 12,3 g 2-Aminobenzol-1,4-disulfonsäure in 100 ml Wasser mit 9,0 g Cyanurchlorid bei 20 °C und pH 5,0 durch Zutropfen von 2n Sodalösung.

Die Lösung dieser Reaktivkomponente läßt man nun innerhalb von mehreren Stunden allmählich zu der obigen Lösung der Triphendioxazinverbindung bei 20 °C zutropfen und hält in dem Reaktionsgemisch den pH-Wert mit 2n Natronlauge auf 9,5. Man rührt unter diesen Bedingungen über Nacht weiter und salzt dann den gebildeten Farbstoff durch Kaliumchlorid bis nahe zur Sättigungsgrenze der Lösung aus.

Die Fällung wird abgesaugt, der Filterkuchen mit 25 %iger Kaliumchloridlösung gewaschen und bei 50 °C im Vakuum getrocknet. Der erhaltene Farbstoff entspricht im wesentlichen der Formel

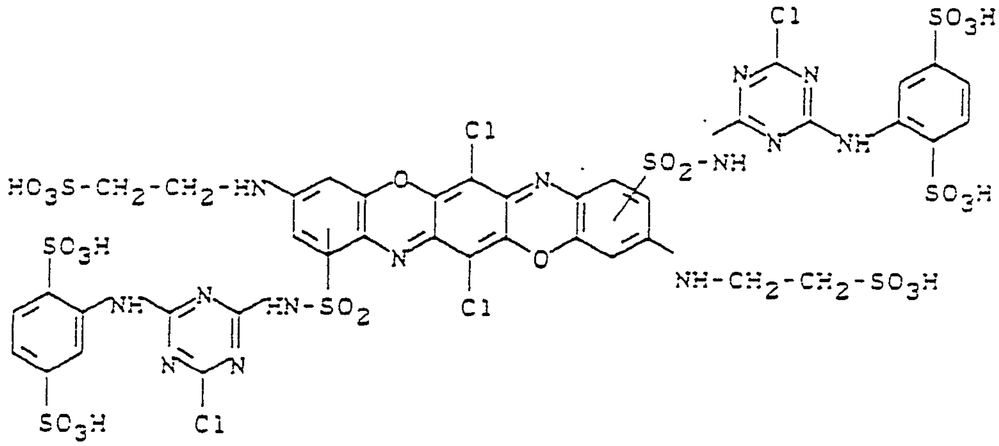

Mit ihm lassen sich Cellulosefasern in kräftigen klaren Blautönen bedrucken und färben.

C.J. Indicator Number 14, $\lambda_{max}$ = 619 nm in Wasser.

Einen sehr ähnlichen Farbstoff erhält man, wenn man anstelle des taurinsubstituierten Triphendioxazinsulfonamids das β-sulfatoethylaminosubstituierte des Beispiels 2 mit 2-(2′, 4′-Dichlortriazinyl)-aminobenzol-1,4-disulfonsäure kondensiert.

Beispiel 4

10,0 g Triphendioxazinverbindung der Formel

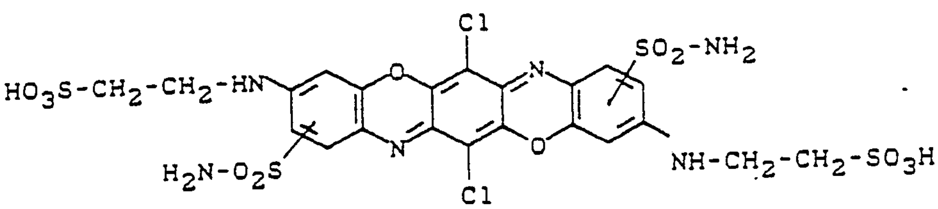

werden in 300 ml Wasser durch Zugabe von verdünnter Natronlauge bis zum pH-Wert von 9,0 bei 45 °C gelöst.

Man läßt eine Lösung von 11,0 g 2,3-Dichlorchinoxalin-6-sulfonsäurechlorid in 15 ml N-Methylpyrrolidon innerhalb von 30 Minuten bei 45 °C zutropfen und hält den pH-Wert mit 2n Natronlauge ständig auf 9,0. Wenn die Umsetzung nach mehreren Stunden beendet ist, wird die erhaltene Lösung filtriert. Aus dem Filtrat salzt man mit Kaliumchlorid den Farbstoff aus, saugt die Fällung ab und wäscht den Filterkuchen mit 25 %iger Kaliumchloridlösung. Er wird im Vakuum bei 40 °C getrocknet. Das erhaltene Produkt der Formel

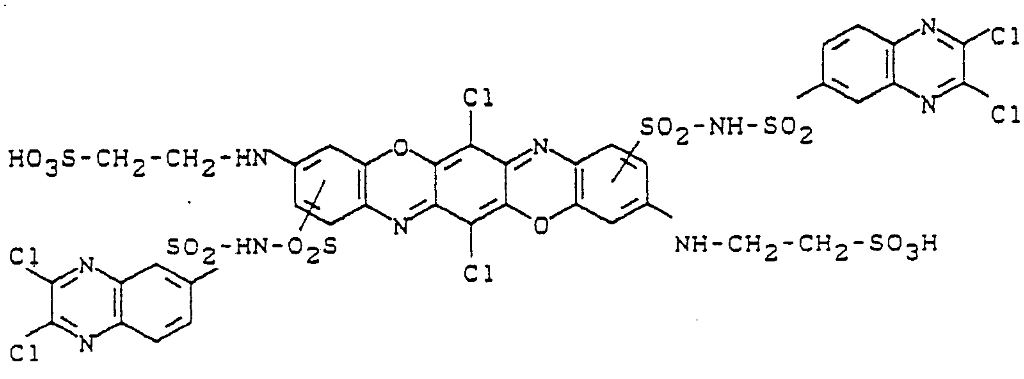

gibt auf Cellulosefasern klare, blaue Färbungen. C.J. Indicator Number 14, $\lambda_{max}$ = 654 nm in Wasser.

Beispiel 5

Kondensiert man im Beispiel 1 die dort eingesetzte Diamino-triphendioxazindisulfonamidverbindung statt mit 2,4,6-Trifluor-5-chlorpyrimidin in analoger Verfahrensweise mit 7,7 ml 2,4-Difluor-5-chlor-6-methylpyrimidin und arbeitet die erhaltene Farbstofflösung wie dort beschrieben auf, so erhält man einen Farbstoff der Formel

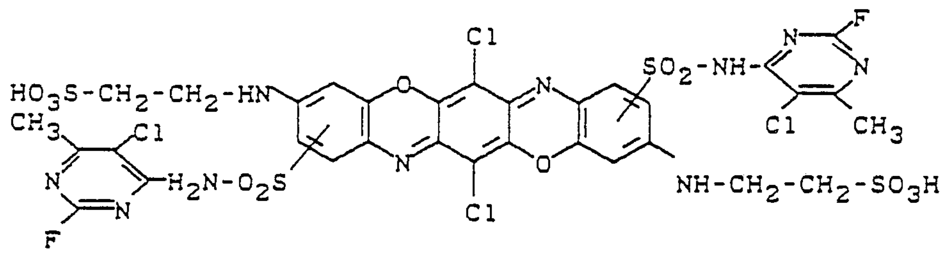

der auf Cellulosefasern kräftige, blaue Drucke und Färbungen ergibt. C.J. Indicator Number 14, $\lambda_{max}$ = 620 nm in Wasser.

Weitere Reaktivfarbstoffe der allgemeinen Formel (I), die ebenfalls zum Färben oder Bedrucken von Cellulosefasern in klaren, kräftigen Blautönen (C.J. Indicator Number 14) geeignet sind, lassen sich aufbauen, wenn man die Triphendioxazinsulfonamidverbindungen der allgemeinen Formel

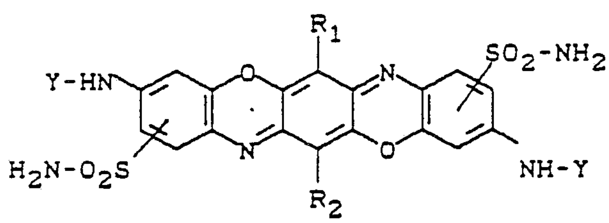

(X)

worin $R_1$, $R_2$ und Y die in den Beispielen nachfolgender Tabelle gekennzeichnete Bedeutung haben, mit den in der letzten Spalte der Tabelle aufgeführten Reaktivkomponenten Z'-halogen kondensiert.

Die Anzahl der herstellbaren Farbstoffe ist dabei nicht auf die angegebenen Kombinationen beschränkt, sondern durch weitere mögliche Kombinationen ergänzt zu denken.

Tabelle

| Nr. | $R_1$ | $R_2$ | Y | Z'-halogen |
|---|---|---|---|---|
| 6 | -Cl | -Cl | $-CH_2-CH_2-OSO_3H$ | 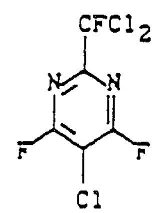 |
| 7 | " | " | " | 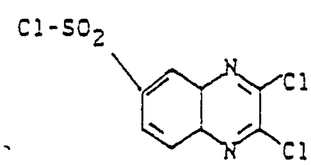 |
| 8 | " | " | $-CH_2-CH_2-CH_2-OSO_3H$ | 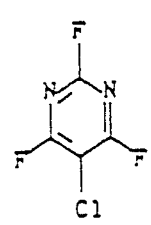 |

Tabelle (Fortsetzung)

| Nr. | $R_1$ | $R_2$ | Y | Z'-halogen |
|---|---|---|---|---|
| 9 | " | " | 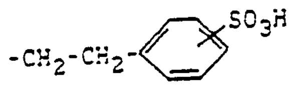 | " |
| 10 | " | " | $-(CH_2)_4-SO_3H$ | " |
| 11 | " | " | 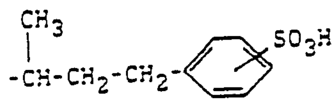 | " |
| 12 | Cl | Cl | $-CH_2-CH(CH_3)-OSO_3H$ | 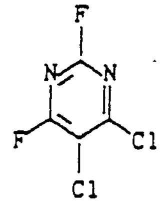 |
| 13 | " | " | 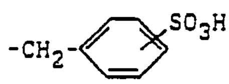 | 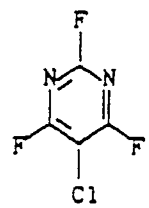 |
| 14 | " | " | $-CH_2-CH_2-O-CH_2-CH_2-OSO_3H$ | " |
| 15 | " | " | $-(CH_2)_4-OSO_3H$ | " |
| 16 | " | " | $-CH_2-CH(OSO_3H)-CH_2-OSO_3H$ | " |
| 17 | " | " | $-CH_2-CH_2-NH-CH_2-CH_2-OSO_3H$ | " |
| 18 | " | " | $-CH_2-CH_2-SO_3H$ | 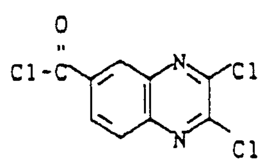 |
| 19 | Cl | Cl | $-CH_2-CH_2-OPO_3H_2$ | 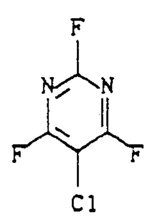 |

Tabelle (Fortsetzung)

| Nr. | $R_1$ | $R_2$ | Y | Z'-halogen |
|---|---|---|---|---|
| 20 | Cl | Cl | $-CH_2-CH_2-COOH$ | 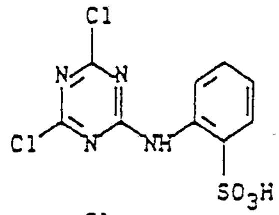 |
| 23 | " | " | $-CH_2-CH_2-SO_3H$ | 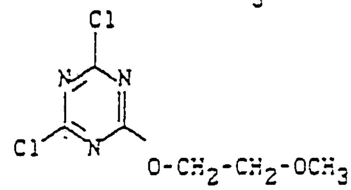 |
| 24 | " | " | 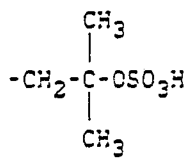 | 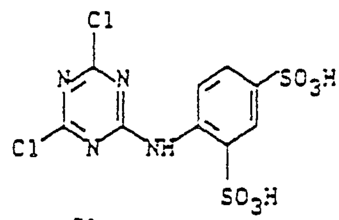 |
| 25 | " | " | $-CH_2-CH_2-CH_2-OSO_3H$ | 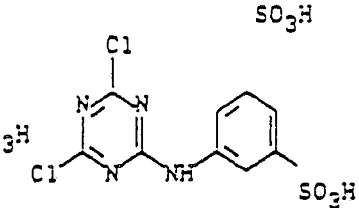 |
| 26 | " | " | $-CH_2-CH_2-SO_3H$ | 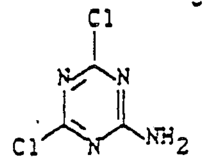 |
| 27 | " | " | " | 1. 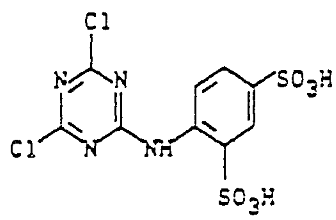 2. 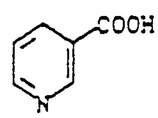 |
| 28 | Cl | Cl | 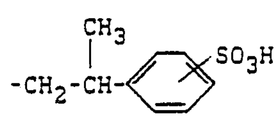 | 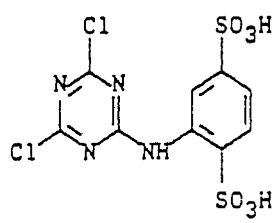 |
| 29 | " | " | $-CH_2-CH_2-CH_2OCH_3$ | 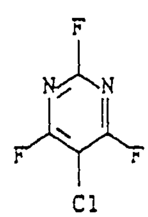 |

Tabelle (Fortsetzung)

| Nr. | $R_1$ | $R_2$ | Y | Z'-halogen |
|---|---|---|---|---|
| 30 | " | " | $-(CH_2-CH_2-O)_3-CH_2-CH_2-OCH_3$ | 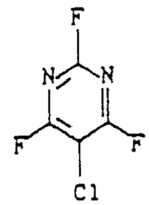 |
| 31 | " | " | 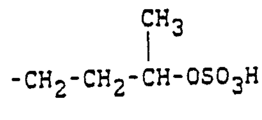 | 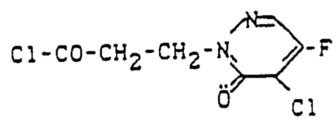 |
| 32 | " | " | $-CH_2-CH_2-SO_3H$ | 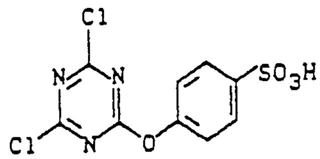 |
| 33 | Cl | Cl | $-CH_2-CH_2-CH_2-OSO_3H$ | 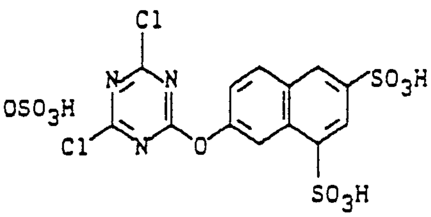 |
| 34 | " | " | $-CH_2-CH_2-OSO_3H$ | 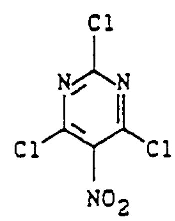 |
| 35 | " | " | $-CH_2-CH_2-SO_3H$ | 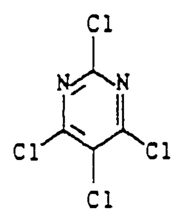 |
| 36 | " | " | $-(CH_2)_4-OSO_3H$ | 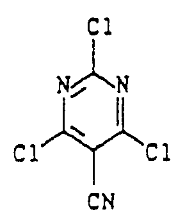 |
| 37 | " | " | $-CH_2-COOH$ | 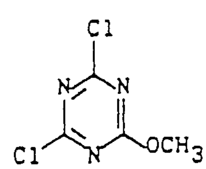 |

Tabelle (Fortsetzung)

| Nr. | $R_1$ | $R_2$ | Y | Z'-halogen |
|---|---|---|---|---|
| 38 | Cl | Cl | 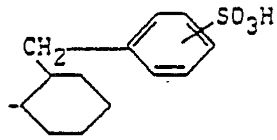 | 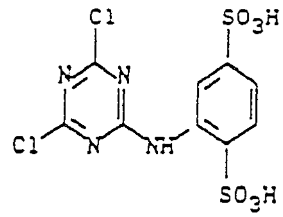 |
| 39 | " | " | $-CH_2-CH_2-OH$ | " |
| 40 | " | " | $-CH_2-CH_2-COOH$ | 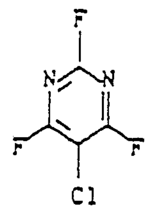 |
| 41 | " | " | $-(CH_2)_5-COOH$ | 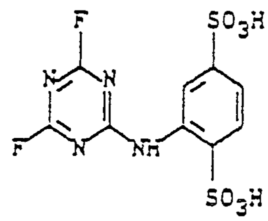 |
| 42 | " | " | $-CH_2-CH_2-OSO_3H$ | 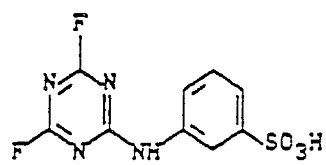 |
| 43 | " | " | $-CH_2-CH_2-SO_3H$ | 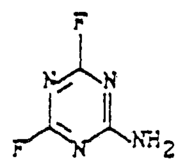 |
| 44 | " | " | $-CH_2-CH_2-SO_3H$ | 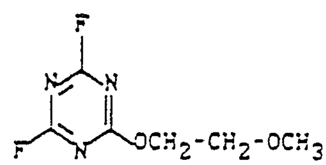 |
| 45 | Cl | Cl | $-CH_2-CH_2-CH_2-OSO_3H$ | 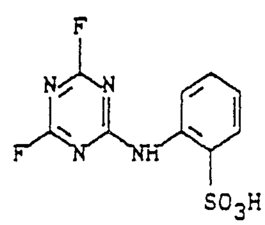 |
| 46 | " | " | $-CH_2-CH_2-OSO_3H$ | 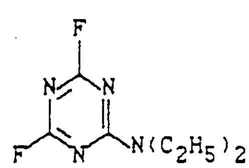 |

Tabelle (Fortsetzung)

| Nr. | $R_1$ | $R_2$ | Y | Z'-halogen |
|---|---|---|---|---|
| 47 | H | H | $-CH_2-CH_2-SO_3H$ | 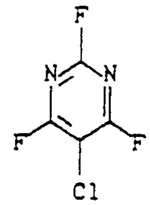 |
| 48 | $NH-COCH_3$ | $NH-COCH_3$ | $-CH_2-CH_2-OSO_3H$ | 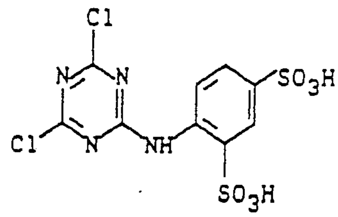 |
| 49 | $CH_3$ | $CH_3$ | $-CH_2-CH_2-SO_3H$ | 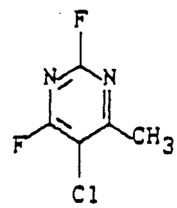 |
| 50 | $CH_3$ | Cl | $-CH_2-CH_2-OSO_3H$ | 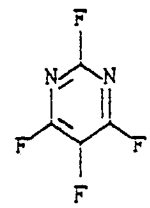 |
| 51 | Cl | Cl | $-CH_2-CH_2-SO_3H$ | 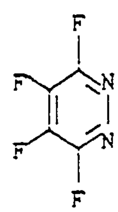 |
| 52 | $OCH_3$ | $OCH_3$ | $-CH_2-CH_2-$ 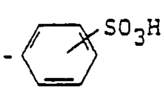 | 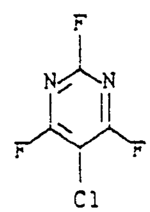 |
| 53 | $OCH_3$ | $OCH_3$ | $-CH_2-CH_2-SO_3H$ | 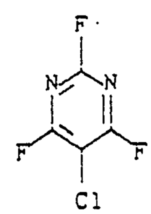 |
| 54 | Br | Br | $-CH_2-CH_2-OSO_3H$ | 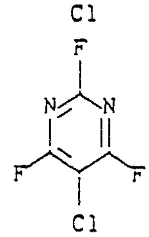 |

Tabelle (Fortsetzung)

| Nr. | $R_1$ | $R_2$ | Y | Z'-halogen |
|---|---|---|---|---|
| 55 | Cl | Cl | $-CH_2-CH_2-SO_3H$ | 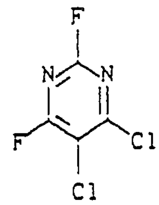 |
| 56 | Cl | Cl | $-CH_2-CH_2-OSO_3H$ | 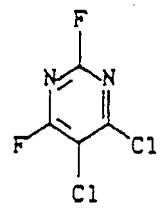 |
| 57 | Cl | Cl | $-CH_2-CH_2-SO_3H$ | 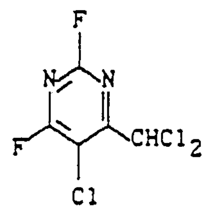 |
| 58 | Cl | Cl | " | 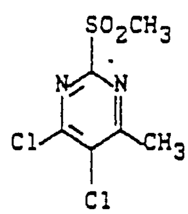 |
| 59 | Cl | Cl | $-CH_2-CH_2-CH_2-OSO_3H$ | 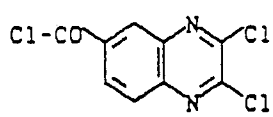 |
| 60 | Cl | Cl | $-CH_2-CH_2-SO_3H$ | 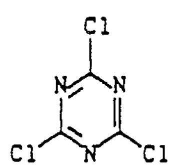 |
| 61 | Cl | Cl | $-CH_2-CH-CH_2-SO_3H$<br>$OSO_3H$ | 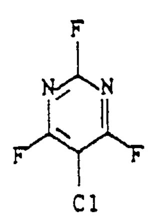 |
| 62 | Cl | Cl | $-CH_2-CH_2-$ 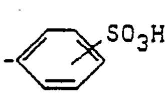 | 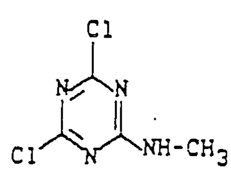 |

Tabelle (Fortsetzung)

| Nr. | $R_1$ | $R_2$ | Y | Z'-halogen |
|---|---|---|---|---|
| 63 | Cl | Cl | $-CH_2-CH_2-O-CH_2-CH_2-OSO_3H$ | 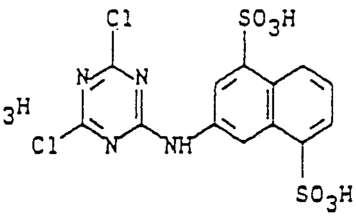 |
| 64 | Cl | Cl | $-CH_2-CH_2-SO_3H$ | 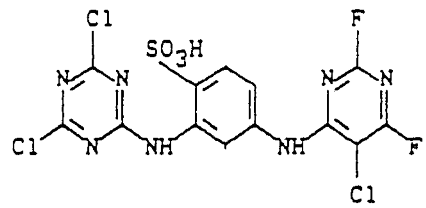 |
| 65 | Cl | Cl | 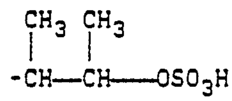 | 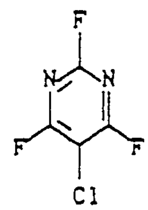 |
| 66 | Cl | Cl | 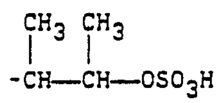 | 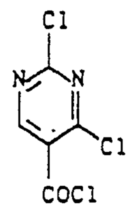 |
| 67 | Cl | Cl | $-CH_2-CH_2-SO_3H$ | 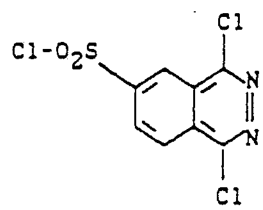 |
| 68 | Cl | Cl | $-CH_2-CH_2-OSO_3H$ | 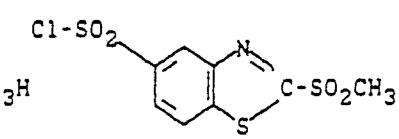 |
| 69 | Cl | Cl | $-CH_2-CH_2-OSO_3H$ | 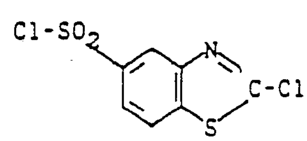 |
| 70 | Cl | Cl | 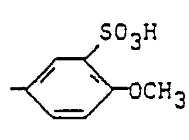 | 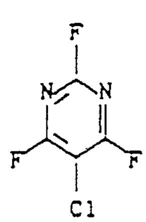 |

Tabelle (Fortsetzung)

| Nr. | $R_1$ | $R_2$ | Y | Z'-halogen |
|---|---|---|---|---|
| 71 | Cl | Cl | 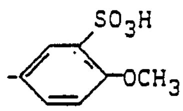 | 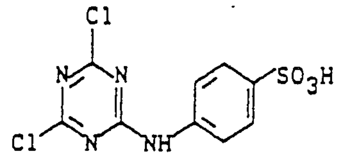 |
| 72 | Cl | Cl | 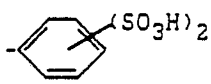 | 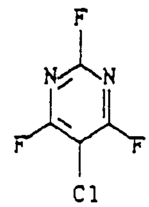 |
| 73 | Cl | Cl | 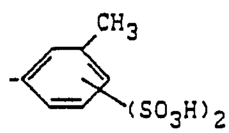 | 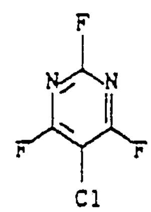 |
| 74 | Cl | Cl | 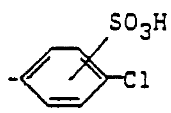 | 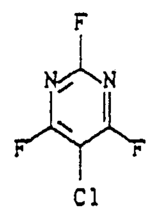 |
| 75 | Cl | Cl | 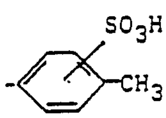 | 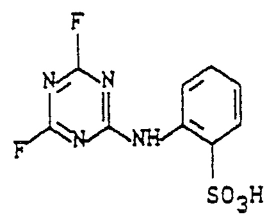 |
| 76 | Cl | Cl | -H | 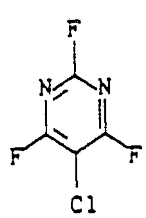 |
| 77 | Cl | Cl | -H | 1. 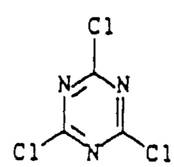 2. 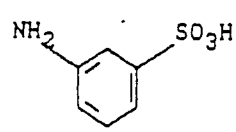 |

Tabelle (Fortsetzung)

| Nr. | $R_1$ | $R_2$ | Y | Z'-halogen |
|---|---|---|---|---|
| 78 | Cl | Cl | $-C_2H_5$ | 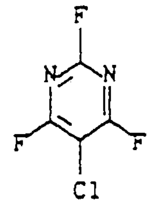 |
| 79 | Cl | Cl | $-CH_2-CH_2-SO_3H$ | 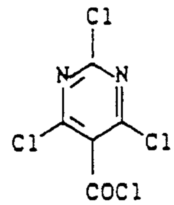 |
| 80 | Cl | Cl | $-CH_2-CH_2-SO_3H$ | 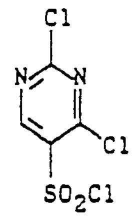 |
| 81 | " | " | " | 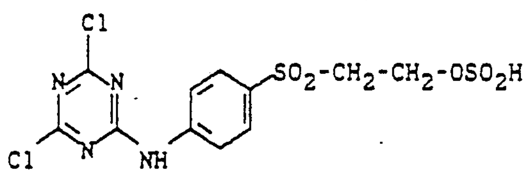 |
| 82 | " | " | " | 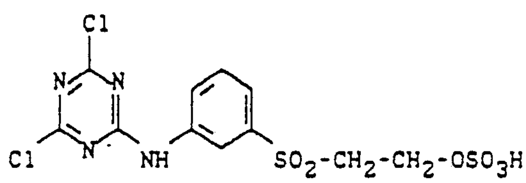 |
| 83 | " | " | $-CH_2-CH_2-OSO_3H$ | " |
| 84 | Cl | Cl | $-CH_2-CH_2-OSO_3H$ | 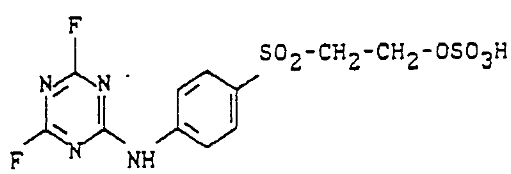 |

Beispiel 85

18,8 g Triphendioxazinsulfonamid-Farbbase des Beispiels 1 werden in 200 ml Wasser mit 10,7 g 2,4-Dichlor-6-methoxytriazin bei 20 °C und pH 10,0 durch Zutropfen von Natronlauge kondensiert. Nach Klärung der Lösung wird das Filtrat mit 22 % Kaliumchlorid versetzt, die Fällung abgesaugt und mit 25 %iger Kaliumchloridlösung gewaschen. Man erhält einen Farbstoff der Formel

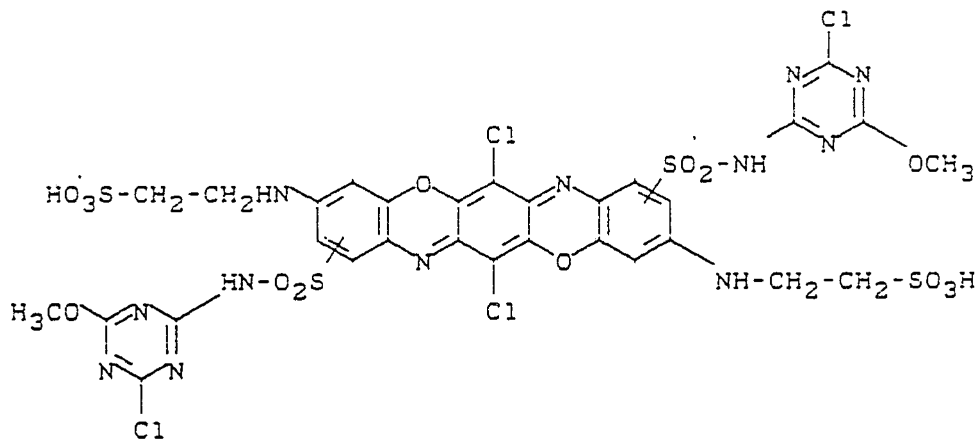

$\lambda_{max}$ = 621 nm in Wasser,

der im Vakuum bei 50 °C getrocknet wird. Mit ihm lassen sich Cellulosefasern in licht- und naßechten kräftigen Blautönen bedrucken.

Beispiel 86

30,0 g Farbstoff des Beispiels 85 = 21,0 g salz- und wasserfreier Farbstoff werden in 400 ml Wasser bei 25 °C gelöst.

Man trägt in die Lösung 14,0 g Natriumsulfit in etwa 30 Minuten ein, der pH-Wert steigt dabei auf 9,3.

Die erhaltene Lösung wird etwa 20 Stunden bei 20 °C gerührt, bis der Austausch des Chloratoms gegen die Sulfonsäuregruppierung beendet ist. Der Farbstoff wird durch Sättigen der Lösung mit Kaliumchlorid ausgesalzen, abgesaugt, mit 25 %iger Kaliumchloridlösung gewaschen und getrocknet.

Man erhält in Form des Salzes einen Farbstoff der Formel

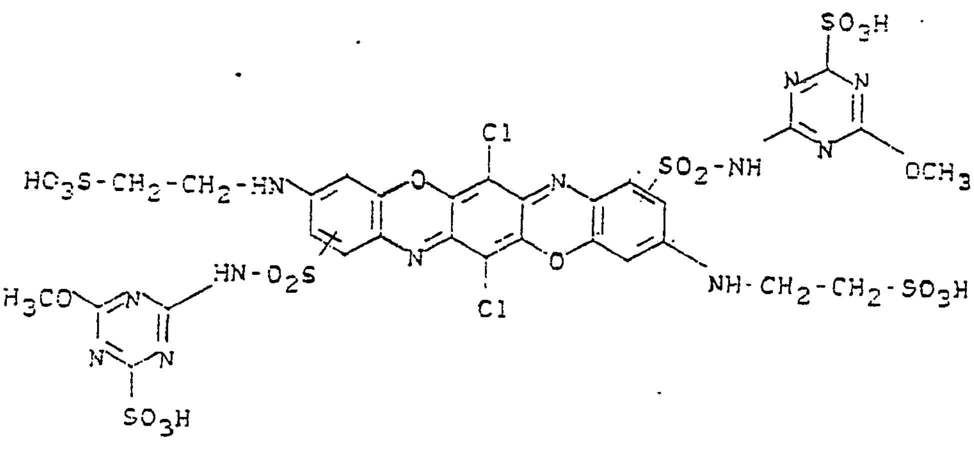

$\lambda_{max}$ = 620 nm in Wasser,

mit dem sich Cellulosefasern in licht- und neßechten kräftigen Blautönen bedrucken lassen.

**Patentansprüche**

1. Farbstoffe der Formel

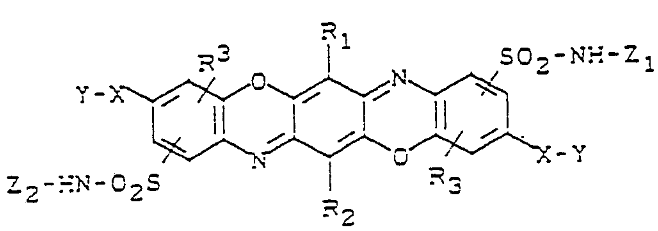

worin

$R_1$, $R_2$ = Wasserstoff, Cl, Br, gegebenenfalls substituiertes $C_1$-$C_4$-Alkyl, $C_1$-$C_4$-Alkoxy, Phenoxy, Carbonamid, Acylamino oder Carboxy,

$R_3$ = H, Cl, Br, gegebenenfalls substituiertes $C_1$-$C_4$-Alkyl oder $C_1$-$C_4$-Alkoxy,

$R_4$
|
X = N, O

$R_4$ = H oder gegebenenfalls substituiertes $C_1$-$C_4$-Alkyl,

Y = gegebenenfalls durch Sulfo, Sulfato-, Phosphato-, Carboxy-, Thiosulfato-, Hydroxy-, Alkoxy substituierte oder NH, O oder $SO_2$ unterbrochene $C_1$-$C_6$-Alkylreste, Cycloalkylreste, Aralkylreste und Arylreste,

$Z_1$, $Z_2$ = heterocyclischer faserreaktiver Rest.

2. Farbstoffe des Anspruchs 1 der Formel

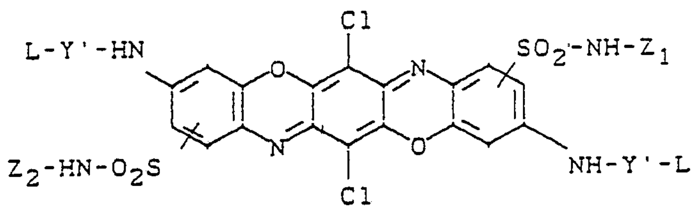

worin

Y' = $C_1$-$C_6$-Alkylen, Ar-($C_1$-$C_4$)-alkylen,

L = $SO_3H$, $OSO_3H$, $OPO_3H_2$, COOH, worin Ar = Arylen.

3. Farbstoffe des Anspruchs 2 der Formel

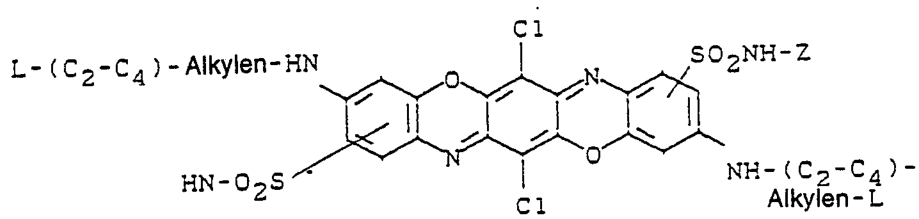

worin Z für den Rest eines Halogenpyrimidins, Halogentriazins oder für 2,3-Dichlorchinoxalin-6-carbonyl oder 2,3-Dichlorchinoxalin-6-sulfonyl steht.

4. Verwendung der Farbstoffe der Ansprüche 1-3 zum Färben und Bedrucken von Hydroxylgruppen oder Amidgruppen enthaltenden Materialien.

**Claims**

1. Dyestuffs of the formula

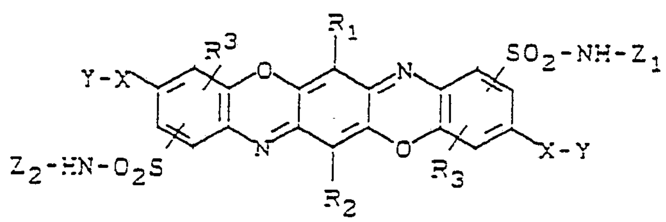

wherein

$R_1$, $R_2$ = hydrogen, Cl, Br, optionally substituted $C_1$-$C_4$-alkyl, $C_1$-$C_4$-alkoxy, phenoxy, carboxamide, acylamino or carboxyl,

$R_3$ = H, Cl, Br, optionally substituted $C_1$-$C_4$-alkyl or $C_1$-$C_4$-alkoxy,

$R_4$
|
X = N or O

$R_4$ = H or optionally substituted $C_1$-$C_4$-alkyl,

Y = cycloalkyl radicals, aralkyl radicals, aryl radicals or $C_1$-$C_6$-alkyl radicals which are optionally

substituted by sulpho, sulphato, phosphato, carboxyl, thiosulphato, hydroxyl or alkoxy or interrupted by NH, O or $SO_2$,

$Z_1$, $Z_2$ = a heterocyclic fibre-reactive radical.

2. Dyestuffs of Claim 1 of the formula

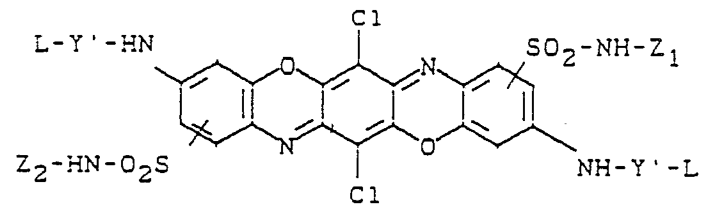

wherein

Y' = $C_1$-$C_6$-alkylene or Ar-($C_1$-$C_4$)-alkylene, and

L = $SO_3H$, $OSO_3H$, $OPO_3H_2$ or COOH, wherein Ar = arylene.

3. Dyestuffs of Claim 2 of the formula

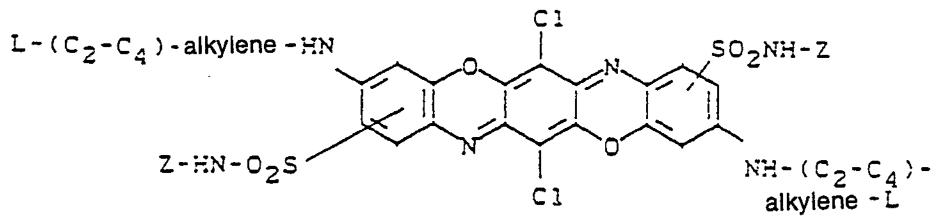

wherein Z stands for the radical of a halogenopyrimidine, halogenotriazine or for 2,3-dichloroquinoxaline-6-carbonyl or 2,3-dichloroquinoxaline-6-sulphonyl.

4. Use of the dyestuffs of Claims 1-3 for dyeing and printing hydroxyl- or carbamoyl-containing materials.

**Revendications**

1. Colorants de formule

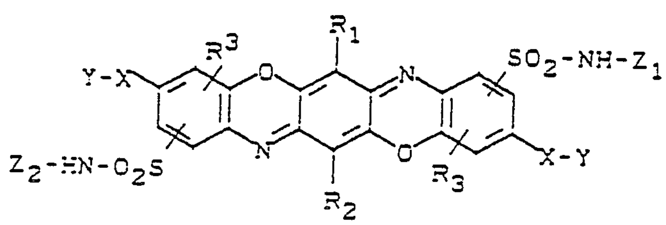

dans laquelle

$R_1$, $R_2$ = hydrogène, Cl, Br, alkyle en $C_1$-$C_4$ éventuellement substitué, alkoxy en $C_1$-$C_4$, phénoxy, carboxamido, acylamino ou carboxy.

$R_3$ = H, Cl, Br, alkyle en $C_1$-$C_4$ éventuellement substitué ou alkoxy en $C_1$-$C_4$,

$X = \overset{R_4}{\overset{|}{N}}$, O

$R_4$ = H ou alkyle en $C_1$-$C_4$ éventuellement substitué,

Y = restes alkyle en $C_1$-$C_6$ éventuellement substitués par des radicaux sulfo, sulfato, phosphato, carboxy, thiosulfato, hydroxy, alkoxy ou interrompus par NH, O ou $SO_2$, des restes cycloalkyle, des restes aralkyle et des restes aryle,

$Z_1$, $Z_2$ = reste hétérocyclique réactif envers les fibres.

2. Colorants suivant la revendication 1, de formule

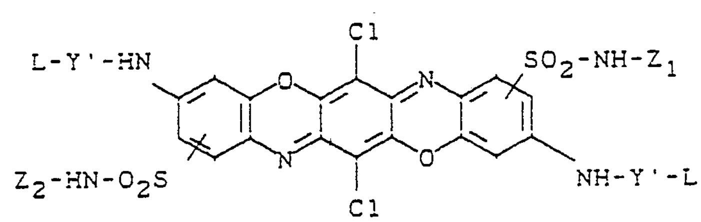

dans laquelle

Y' = alkylène en $C_1$-$C_6$, Ar-(alkylène en $C_1$-$C_4$),

L = $SO_3H$, $OSO_3H$, $OPO_3H_2$, COOH, Ar désignant un groupe arylène.

3. Colorants suivant la revendication 2, de formule

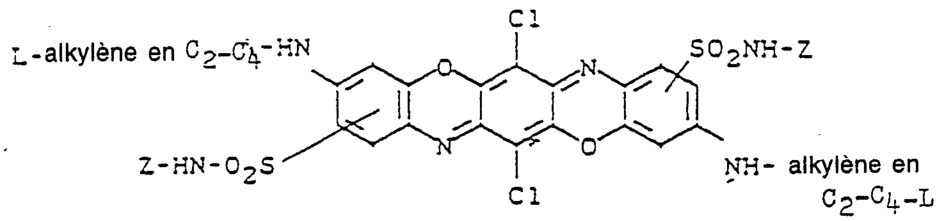

dans laquelle Z représente le reste d'une halogénopyrimidine, d'une halogénotriazine ou un reste 2,3-dichloroquinoxaline-6-carbonyle ou 2,3-dichloroquinoxaline-6-sulfonyle.

4. Utilisation des colorants suivant les revendications 1 à 3 pour la teinture et l'impression de matières contenant des groupes hydroxyle ou amido.